(19) Europäisches Patentamt
European Patent Office
Office européen des brevets

(11) **EP 2 924 404 A1**

(12) # EUROPEAN PATENT APPLICATION

(43) Date of publication:
**30.09.2015 Bulletin 2015/40**

(51) Int Cl.:
***G01K 7/02*** (2006.01)

(21) Application number: **15152226.5**

(22) Date of filing: **23.01.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.03.2014 US 201461971207 P**
**07.05.2014 US 201414271633**

(71) Applicant: **Rockwell Automation Technologies, Inc.**
**Mayfield Heights, OH 44124 (US)**

(72) Inventors:
• **Van Minnen, Charmaine J.**
**Aurora, OH Ohio 44202 (US)**
• **Kretschmann, Robert J.**
**Bay Village, OH Ohio 44140 (US)**
• **Hildebran, Bret S.**
**Chagrin Falls, OH Ohio 44023 (US)**
• **Pasela, David A.**
**Seven Hills, OH Ohio 44131 (US)**

(74) Representative: **Grünecker Patent- und Rechtsanwälte**
**PartG mbB**
**Leopoldstraße 4**
**80802 München (DE)**

(54) **Thermocouple module with wire resistance compensation**

(57)     An interface circuit (27) is provided for an Input/Output (I/O) module (24) in an industrial controller (12) to compensate for voltage generated by a bias current in a thermocouple (26). During a calibration routine (100), the interface circuit (27) supplies two known bias currents to a thermocouple (26) and measures a voltage generated across the thermocouple (26) as a result of each bias current. The measured voltages and known current values are used to determine the resistance value of the thermocouple leads (23). Using two known bias currents provides for an accurate measurement of the resistance value of the thermocouple leads (23) when the thermocouple (26) is generating a voltage corresponding to the measured temperature. Either the I/O module (24) or the industrial controller (12) may determine a voltage resulting from the bias current applied to the thermocouple (26) during operation as a function of the measured resistance and compensate the voltage measured at the thermocouple leads (23) to accurately determine the measured temperature.

FIG. 1

EP 2 924 404 A1

**Description**

CROSS REFERENCE TO RELATED APPLICATION

This application claims priority to US provisional application serial number 61/971,207, filed on March 27, 2014, the entire content of which is hereby incorporated by reference.

BACKGROUND OF THE INVENTION

The present invention relates to industrial control systems used for real-time control of industrial processes, and in particular to an input/output (I/O) module for connection to thermocouples to provide for temperature measurement.

Industrial control systems are special purpose computer systems used in controlling industrial processes. Under the direction of a stored control program, a programmable logic controller, being part of the industrial control system, reads inputs from one or more I/O modules and writes outputs to one or more I/O modules. The inputs are derived from signals obtained from sensors associated with the industrial process and the output signals produce electrical signals to actuators and the like in the industrial process. The inputs and outputs may be binary, that is on or off, or analog, providing a value with a continuous range, for more complex I/O devices like motor controllers and the like.

One form of analog I/O module receives an input from a thermocouple. As is understood in the art, thermocouples provide a voltage that is proportional to a difference in temperature between two junctions of dissimilar metals per the Seebeck effect. In order to determine a temperature at one junction ("hot junction"), the second junction ("cold junction") may be held at a standard and known temperature. For practical devices, however, this cold junction is not held at a particular temperature but rather its temperature is measured and used to provide for "cold junction compensation" in which to measure temperatures applied to empirically derived compensation tables that may be used to correct the value of the hot junction. These tables may also be used to correct for inherent nonlinearities in the voltage-to-temperature function of the thermocouple.

In using a thermocouple in an industrial process, it is important to establish that the thermocouple remains connected; otherwise a disconnected thermocouple may be interpreted as an erroneous temperature value. For this purpose, it is known to provide a small bias current (e.g. 25 nA) through the thermocouple wire to establish continuity and hence the presence of the thermocouple. The voltage change provided by the Seebeck effect may be small and this bias current is selected so that the resistance of the thermocouple and the voltage drop caused by the bias current is minor compared to the Seebeck effect voltage.

However, thermocouple wire typically has a high resistivity. Further, the thermocouple may be positioned some distance from the input module. As a result, a voltage drop is generated along the thermocouple wire due to the bias current and the resistance of the thermocouple wire. Although the bias current is kept to a minimal value (e.g. 25 nA), the magnitude of the voltage potential generated from the bias current conducted in the thermocouple wire may be sufficient to introduce error in the temperature measurement. Thus, it would be desirable to provide a control system to compensate for the voltage potential generated by the bias current.

SUMMARY OF THE INVENTION

The subject matter disclosed herein describes an interface circuit for an I/O module in an industrial controller to compensate for a voltage potential generated by a bias current in a thermocouple. During a calibration routine, the interface circuit supplies two known bias currents to a thermocouple and measures a voltage generated across the thermocouple as a result of each bias current. The measured voltages and known current values are used to determine the resistance value of the thermocouple leads. Using two known bias currents provides for an accurate measurement of the resistance value of the thermocouple leads when the thermocouple is generating a voltage corresponding to the measured temperature. Either the I/O module or the industrial controller may determine a voltage resulting from the bias current applied to the thermocouple during operation as a function of the measured resistance and compensate the voltage measured at the thermocouple leads to accurately determine the measured temperature. Accordingly, the present invention dynamically measures the resistance of the thermocouple wire to provide an accurate offset voltage that can be used to remove the voltage of the bias current in the thermocouple measurement.

According to one embodiment of the invention, an interface circuit for use with a temperature sensor connected to an industrial controller includes a first terminal, a second terminal, and a resistance measuring circuit. The first terminal is configured to releasably receive a first lead of the temperature sensor, and the second terminal is configured to releasably receive a second lead of the temperature sensor. The temperature sensor is of a type to generate a voltage as a function of a measured temperature. The resistance measuring circuit is operatively connected to at least one of the first terminal and the second terminal and configured to measure a resistance of the first and second leads when the temperature sensor is generating the voltage.

According to another embodiment of the invention, a module for use with an industrial controller and configured to be connected to a temperature sensor includes a first terminal, a second terminal, a switch, and a controller. The first terminal is configured to releasably receive a first lead of the temperature sensor, and the second terminal is configured to releasably receive a second lead of the temperature sensor. The temperature sensor is of a type to generate a voltage as a function of a measured temperature. The switch is configured to receive a control signal and to selectively provide either a first bias current or a second bias current to either the first or the second terminal as a function of the control signal. The controller is configured to generate the control signal for the switch and to receive a signal corresponding to a measured voltage present between the first terminal and the second terminal.

According to yet another embodiment of the invention, a method of measuring temperature with a module of an industrial controller is disclosed. The temperature is measured with a temperature sensor having a first lead and a second lead, where the first lead is connected to a first terminal of the module and the second lead is connected to a second terminal of the module. The temperature sensor generates a signal voltage as a function of the temperature. A first bias current is supplied to the first lead of the temperature sensor, and a first voltage is measured between the first terminal and the second terminal. A second bias current is supplied to the first lead of the temperature sensor, and a second voltage is measured between the first terminal and the second terminal, where the second bias current has a different amplitude than the first bias current. A resistance value of the first lead and the second lead is determined as a function of the first and the second measured voltages, and a compensation voltage is subtracted from the signal voltage, where the compensation voltage corresponds to a magnitude of a bias current applied to the first terminal when measuring temperature multiplied by the resistance value of the first lead and the second lead from the signal voltage.

These and other advantages and features of the invention will become apparent to those skilled in the art from the detailed description and the accompanying drawings. It should be understood, however, that the detailed description and accompanying drawings, while indicating preferred embodiments of the present invention, are given by way of illustration and not of limitation. Many changes and modifications may be made within the scope of the present invention without departing from the spirit thereof, and the invention includes all such modifications.

BRIEF DESCRIPTION OF THE DRAWINGS

Various exemplary embodiments of the subject matter disclosed herein are illustrated in the accompanying drawings in which like reference numerals represent like parts throughout, and in which:

Fig. 1 is a partial block diagram of a control system including an I/O module incorporating a thermocouple interface circuit according to one embodiment of the present invention;
Fig. 2 is a block diagram of the thermocouple interface circuit of the I/O module of Fig. 1 according to one embodiment of the invention;
Fig. 3 is a block diagram of the thermocouple interface circuit of the I/O module of Fig. 1 according to another embodiment of the invention;
Fig. 4 is a graphical representation of measurements of voltage and current utilized by the invention to determine thermocouple wire resistance; and
Fig. 5 is a flowchart illustrating one method of measuring temperature by the I/O module of Fig. 1.

In describing the various embodiments of the invention which are illustrated in the drawings, specific terminology will be resorted to for the sake of clarity. However, it is not intended that the invention be limited to the specific terms so selected and it is understood that each specific term includes all technical equivalents which operate in a similar manner to accomplish a similar purpose. For example, the word "connected," "attached," or terms similar thereto are often used. They are not limited to direct connection but include connection through other elements where such connection is recognized as being equivalent by those skilled in the art.

DETAILED DESCRIPTION OF THE PREFERRED EMBODIMENT

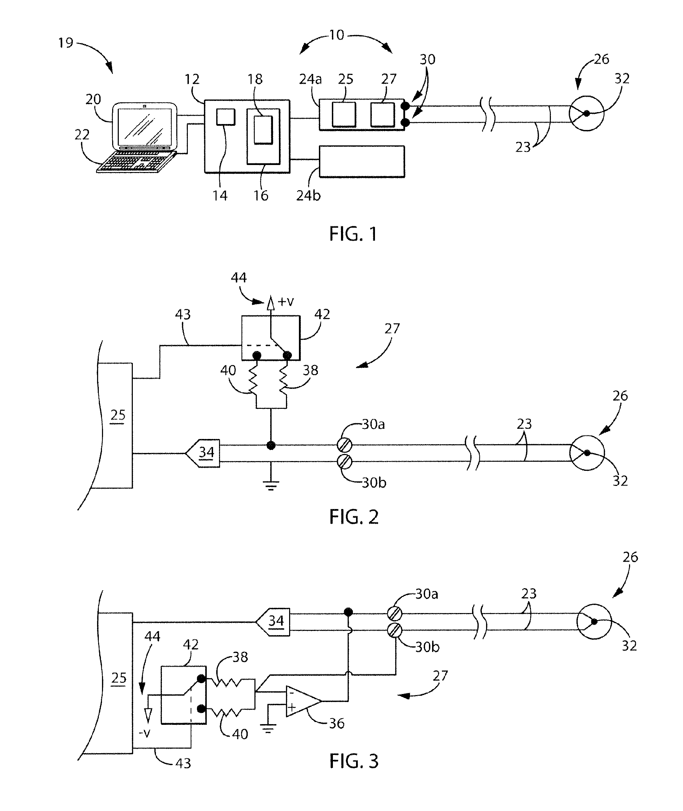

Referring now to Fig. 1, a portion of an industrial control system 10 for controlling an industrial machine or process is illustrated. According to the illustrated embodiment, the industrial control system 10 includes an industrial controller 12 having one or more processors 14 communicating with a memory device 16. Each processor 14 is configured to execute instructions and to access or store operating data and/or configuration parameters stored in the memory device 16. It is contemplated that the processor 14 may include a single processing device or multiple processing devices executing in parallel and may be implemented in separate electronic devices or incorporated on a single electronic device, such as a field programmable gate array (FPGA) or application specific integrated circuit (ASIC). Similarly, the memory device 16 may be a single device, multiple devices or may be incorporated in part or in whole within the FPGA or ASIC The memory device 16 may further include one or more stored programs 18, for example, an operating system and a real time control program for controlling industrial devices.

The industrial controller 12 may communicate with a human machine interface (HMI) 19 including, for example, a display 20 and a keyboard 22 or the like, for outputting information to a user and receiving instructions from a user. It is contemplated that the HMI 19 may include other devices, either separately connectable or integrated into a single chassis, including, but not limited to, a keyboard, touchpad, mouse, trackball, or a touch-screen display device. The HMI 19 may further include a memory device, processor, communication ports and other hardware components according to the system requirements. It is further contemplated that multiple display devices and/or multiple input devices may be distributed about the controlled machine or process and connected to one or more processing devices. The HMI 19 may be used to display operating parameters and/or conditions of the controlled machine or process, receive commands from the operator, or change and/or load a control program or configuration parameters.

The industrial controller 12 is further configured to communicate with one or more I/O modules 24a, 24b that may provide signals to actuators on the industrial machine or process or receive signals from sensors on that industrial machine or process. In the illustrated example, the I/O module 24a provides connections to leads 23 of a thermocouple 26 having a hot junction 32, the latter generating a Seebeck effect voltage according to the temperature of the hot junction 32 as is understood in the art. The I/O module 24a also includes a controller 25 that may be a microprocessor, logic circuit, or combination thereof and that may be configured to execute a firmware program stored in memory in the I/O module. The I/O module 24a further includes an interface circuit 27 configured to be connected to the thermocouple leads and which will be discussed in more detail below.

Referring next to Fig. 2, one embodiment of the interface circuit 27 is illustrated. The interface circuit 27 may include cold junction terminals 30a, 30b configured to receive the thermocouple leads 23. The thermocouple 26 is positioned at a location on the controlled machine or process at which a temperature measurement is desired. The hot junction 32 generates a voltage differential as a function of the temperature at the hot junction 32. The voltage differential is present between the leads 23 which may then be detected at the cold junction terminals 30a, 30b. The cold junction terminals 30a, 30b may communicate with an A/D converter 34 to convert the voltage potential present at the cold junction terminals 30a, 30b to a digital signal, such as a number of counts, readable by the controller 25.

The interface circuit 27 also includes a resistance measuring circuit configured to measure the resistance of the thermocouple leads 23 connected to the terminals 30a, 30b. According to the embodiment illustrated in Fig. 2, the resistance measuring circuit includes a pair of resistors 38, 40. Preferably, the resistors are precision resistors. Optionally, at least a first resistor 38, connected between a reference voltage source 44 and the first terminal 30a, is a precision resistor. The first resistor 38 is selectively connected between the first terminal 30a and the reference voltage source 44. The second resistor 40 is selectively connected between the first terminal 30a and an output of the controller 25. The output of the controller 25 may be configured to provide a voltage, acting as a second reference voltage source. The second terminal 30b is connected to a ground potential such that a voltage divider circuit is established between one of the pair of resistors 38, 40 that is connected to the first terminal 30a and the thermocouple leads 23.

A switch module 42 is provided to selectively connect the first terminal 30a to one of two voltage sources. The switch module 42 receives a control signal 43 to selectively control operation. It is contemplated that the switch module 42 may include a solenoid and relay, where the relay is in a first position when the solenoid is energized and a second position when the relay is de-energized, and the solenoid may be energized/de-energized responsive to the control signal 43. Optionally, the switch module 42 may be a sold-state device including one or more transistors that establish a first conduction path in a first mode and a second conduction path in a second mode, and the operating mode is selected responsive to the control signal 43. Still other configurations of the switch module 42 may be utilized to select between two modes as a function of the control signal 43 without deviating from the scope of the invention.

Referring now to Fig. 3, another embodiment of the interface circuit 27 is illustrated. The interface circuit 27 may include cold junction terminals 30a, 30b attaching to respective leads 23 of the thermocouple 26. The leads 23 extend a length away from the I/O module 24a to a hot junction 32 of dissimilar materials joined, where the dissimilar metals convert a temperature difference into electricity according to the Seebeck effect. Generally, and as represented schematically, the cold junction terminals 30a and 30b may communicate with an A/D converter 34. The A/D converter 34 is operatively connected to the cold junction terminals 30a, 30b to convert the voltage potential present at the cold junction terminals 30a, 30b and generated as a function of the temperature into a digital signal, readable by the controller 25. The controller 25 may be further configured to determine the temperature at that hot junction 32 based on known temperature of the cold junction terminals 30 (for example, measured by a separate circuit not shown) and using a routine implemented in the software of the controller 25.

A bias current may be provided through cold junction terminal 30a by a current source. According to the illustrated embodiment, the current source is an operational amplifier 36 whose output is connected to cold junction terminal 30a and has its inverting input connected to the cold junction terminal 30b and also to a junction of two different precision resistors 38, 40. The non-inverting input of the operational amplifier 36 may be connected to a ground reference. The ends of these precision resistors 38, 40 opposite the inverting terminal of the operational amplifier 36 may be connected to a switch module 42. The switch module 42 is illustrated as a single pole dual throw switch with the end of each of the precision resistors 38, 40 being connected to one of the throws of the switch and the pole of the switch being connected to a precision negative voltage source 44. The position of the pole of the switch module 42 may be toggled between throws by a control signal 43 generated by the controller 25. As discussed above, it is contemplated that the switch module 42 may include a solenoid and relay, where the relay is in a first position when the solenoid is energized and a second position when the relay is de-energized, and the solenoid may be energized/de-energized responsive to the control signal 43. Optionally, the switch module 42 may be a sold-state device including one or more transistors that establish a first conduction path in a first mode and a second conduction path in a second mode, and the operating mode is selected responsive to the control signal 43. Still other configurations of the switch module 42 may be utilized to select between two modes as a function of the control signal 43 without deviating from the scope of the invention.

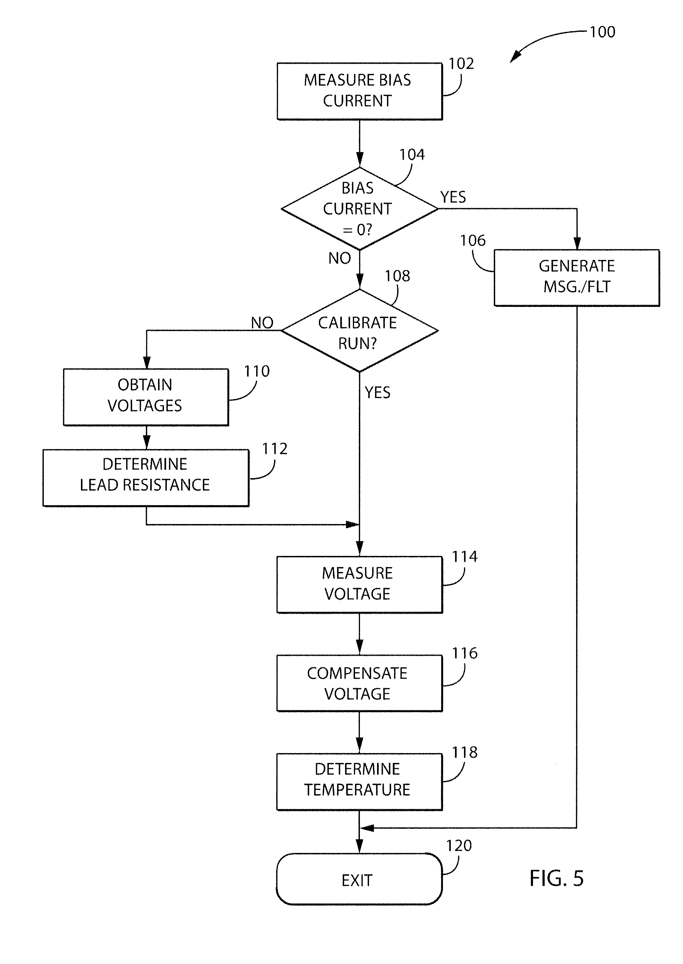

In operation, the interface circuit 27 is used to measure the resistance of the thermocouple leads 23 and to provide the measurement to the controller 25. The controller 25, in turn, may compensate the voltage present at the cold terminals 30a, 30b to subtract a voltage generated by the bias current to improve the accuracy of the temperature measurement. Optionally, the interface circuit 27 may be configured to compensate the voltage present at the cold terminals 30a, 30b prior to providing the measurement to the controller 25. Referring next, to Fig. 5, the steps executed to measure temperature by the I/O module 24a according to one embodiment of the invention are illustrated and identified generally by reference numeral 100.

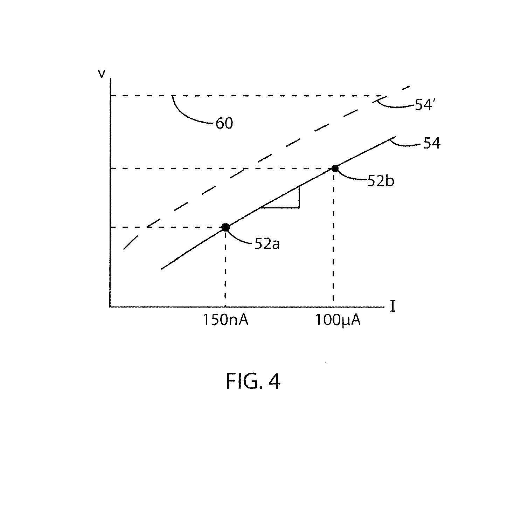

As shown in steps 102-106, the I/O module 24a provides the bias current during normal operation of the industrial controller 12 to detect that the thermocouple is connected and has not failed. The I/O module 24a also includes a circuit to detect if the thermocouple is not connected or if the connection between the two metals at the hot junction 32 has failed, creating an open circuit. At step 102, the I/O module 24a measures the bias current provided to the thermocouple 26. At step 104, the I/O module 24a determines whether the bias current is zero. If no bias current is flowing through the thermocouple 26, either the thermocouple 26 has become disconnected from the cold terminals 30a, 30b or a failure has occurred. The I/O module 24a may set an internal status flag at step 106 which may be, for example, transmitted to the industrial controller 12 such that a message may be posted on the HMI 19 or an interlock condition initiated in the control program 18 to prevent further execution until the thermocouple 26 has been repaired or replaced. Referring to Figs. 3 and 4, it will be appreciated that if continuity breaks in the thermocouple 26, then the operational amplifier 36 will compensate for a resultant lack of current flow through the leads 23 by increasing the voltage of the output to a voltage level 60 typically being equal to a peak output voltage of the operational amplifier 36. Rather than using a separate detection circuit, if this voltage level is detected by the controller 25, it may similarly indicate a continuity break in the thermocouple circuit. It is contemplated that still other circuits and techniques may be utilized to detect an open circuit in the thermocouple 26 without deviating from the scope of the invention.

If, at step 104, the I/O module 24a determines that continuity exists in the thermocouple circuit, the controller 25 continues execution by determining whether a calibration routine has been executed, as shown in step 108. It is contemplated that the calibration routine may be run a single time during a commissioning procedure for the I/O module 24a, upon power up of the I/O module 24a, or at a periodic interval to detect temperature dependent effects on resistance in the thermocouple 26. Upon completion of a calibration routine, an internal status flag may be stored in a memory device of the I/O module 24a. The status flag may be reset, for example at the periodic interval, if desired, or upon loss of power. If the calibration routine has been executed, determination of the measured temperature continues at step 114 as discussed below. If the calibration routine has not been executed, the controller 25 executes steps 110 and 112 to determine a resistance value of the thermocouple leads 23.

As shown in step 110, determination of the resistance value of the thermocouple leads 23 begins by taking at least two measurements of the voltage present at the cold terminals 30a, 30b under two different operating conditions in which two different bias currents are provided to the thermocouple 26. It is contemplated that one of the bias currents may be the normal operational bias current and a second bias current may be a calibration bias current. Optionally, two calibration bias currents may be established under the two different operating conditions. With reference again to Fig. 2, the bias currents may be provided by the resistors 38, 40 being used as pull up resistors between a voltage source and the first cold junction terminal 30a. One or both of the voltage sources may be a reference voltage source 44. Optionally, one of the voltage sources may be an output terminal of the controller 25. The second cold junction terminal 30b is connected to ground such that the voltage potential provided by the voltage source is seen across the connected resistor 38, 40 and the thermocouple 26. The bias current will be a function of the voltage potential and the resistance value of the connected resistor 38, 40 and the resistance of the thermocouple leads 23. Providing a precision resistor for each of the pull up resistors 38, 40 defines a nominal value of the respective bias current with a comparable precision to the resistor used. Optionally, it is contemplated that the exact value of at least one of the bias currents, for example, an operational bias current, provided by resistor 40 may be measured in the factory. The measured value of the current provides a more accurate value of the current than may be determined from the nominal value of the resistor 40 and from the voltage supplied by the voltage source across the resistor. The measured value of the current is stored in a memory device in the I/O module 24a and used by the controller 25 in determining the resistance value of the thermocouple leads 23.

With reference again to Fig. 3, the current source may be configured to provide two different bias currents at one of the cold terminals 30a to establish the two different operation conditions. As will be appreciated to those of ordinary skill in the art, depending upon which precision resistor 38, 40 is connected between the voltage source 44 and the non-inverting input of the operational amplifier 36, one of two different controlled currents will flow through the leads 23 and hot junction 32 of the thermocouple 26. In one embodiment, the currents may be approximately 100 μA and 150 nA, respectively, for the two different precision resistors 38, 40. The operational amplifier 36 provides feedback control of this current largely independent of the resistance presented by the leads 23 and hot junction 32 of the thermocouple 26. According to still another embodiment of the invention, a reference voltage may be provided across one pull-up resistor 38 to generate one bias current and a controlled current source provided to generate the other bias current.

Referring also to Fig. 4, the voltage present at the terminals 30a, 30b under each operating condition may be measured by the A/D converter 34 to generate two data points 52a and 52b. A line may be drawn through each data point 52a, 52b to establish a plot 54 on a VI diagram. The slope of the line corresponds to the resistance of the thermocouple 26 and may be used to determine the thermocouple lead resistance, as shown in step 112. Accordingly, the controller 25 may determine the slope of the plot 54 from the measure voltages and from the bias currents applied to generate each of the measured voltages. The plot 54 on the VI diagram may vary, as represented by 54', as a function of the voltage generated by the thermocouple 26. However, the voltage offset between different plots 54, 54' does not affect the slope of the plot and, therefore, does not affect determination of the resistance of the thermocouple leads 23. Accordingly, this determination of resistance is largely indifferent to the particular temperature of the hot junction 32.

After running the calibration routine, temperature measurement continues at step 114. The voltage potential, $V_{junction}$, at the cold junction terminals 30a, 30b, is measured by the A/D converter 34. The A/D converter 34 generates a digital signal corresponding to the voltage potential, $V_{junction}$, which is readable by the controller 25. At step 116, the junction voltage potential, $V_{junction}$, is compensated for the voltage generated by the operational bias current. According to one embodiment of the invention, an offset value may be stored in the A/D converter 34 and subtracted from the junction voltage potential, $V_{junction}$. The offset value is a compensation voltage, $V_{comp}$, which corresponds to the magnitude of voltage generated in the thermocouple leads 23 due to the operational bias current applied and of the resistance value of the thermocouple leads 23. This compensated voltage corresponds to a temperature voltage, $V_t$, generated at the hot junction 32 of the thermocouple 26. The compensation voltage, $V_{comp}$, may be determined according to the following formula:

$$V_{comp} = R_{thermocouple\ leads} * I_{operational\ bias} \tag{1}$$

Optionally, the A/D converter 34 may provide a digital signal corresponding to the junction temperature to the controller 25 and the controller may compensate the digital signal by subtracting an offset value corresponding to the magnitude of the compensation voltage.

At step 118, the controller 25 determines the temperature at the hot terminal 32 of the thermocouple 26. The temperature may be determined, for example, based on a table stored in memory in which the table includes a list of temperatures corresponding to the digital value. Optionally, configuration parameters may be stored in memory setting for example, a temperature corresponding to a minimum digital value and a maximum digital value expected from the A/D converter 34 and the controller 25 interpolates between the minimum and maximum digital values based on the measured value. According to still other options, the controller 25 in the I/O module may transmit the digital value to another microcontroller, such as a processor module in the industrial controller 12 where the temperature is determined. It is further contemplated that still other methods of determining the temperature from the compensated voltage, $V_{comp}$, may be implemented without deviating from the scope of the invention.

Historically, the operational bias current has been kept to a minimal value (e.g. 25 nA) to similarly keep the magnitude of the voltage generated by the bias current on the thermocouple leads to a minimum. However, generating a bias current of such small value requires precise current control, and small variations in the amplitude due, for example, to electrical noise or other disturbances result in large percentage error in the bias current. Because the I/O module 24a determines the compensation voltage, $V_{comp}$, and subtracts it from the junction voltage, $V_{junction}$, providing an accurate voltage from which temperature may be determined, a higher magnitude operational bias current may be used, making it more immune to electrical noise or other disturbances. In addition, the higher magnitude operational bias current permits more rapid detection of failures in the thermocouple 26. It is contemplated that the magnitude of the operational bias current may be greater than 25 nA and in a range between, for example, 25 nA - 1 μA. According to one embodiment of the invention, the operational bias current is about 150 nA.

According to another aspect of the invention, the precision resistors 38, 40 and voltage reference 44 and/or current source may also be configured to generate a compensation bias current having a relatively higher current. The compensation bias current may be at least one order, and preferably more than one order, of magnitude higher than the operational bias current. The compensation bias current may be, for example, at least 10 $\mu$A and preferably about 100 $\mu$A. The increased magnitude of the compensation bias current makes it again less susceptible to disturbance and also generates two measurement points for the VI plot, as shown in Fig. 4, sufficiently far apart to provide an accurate measurement of the resistance value of the thermocouple leads 23.

Certain terminology is used herein for purposes of reference only, and thus is not intended to be limiting. For example, terms such as "upper", "lower", "above", and "below" refer to directions in the drawings to which reference is made. Terms such as "front", "back", "rear", "bottom" and "side", describe the orientation of portions of the component within a consistent but arbitrary frame of reference which is made clear by reference to the text and the associated drawings describing the component under discussion. Such terminology may include the words specifically mentioned above, derivatives thereof, and words of similar import. Similarly, the terms "first", "second" and other such numerical terms referring to structures do not imply a sequence or order unless clearly indicated by the context.

When introducing elements or features of the present disclosure and the exemplary embodiments, the articles "a", "an", "the" and "said" are intended to mean that there are one or more of such elements or features. The terms "comprising", "including" and "having" are intended to be inclusive and mean that there may be additional elements or features other than those specifically noted. It is further to be understood that the method steps, processes, and operations described herein are not to be construed as necessarily requiring their performance in the particular order discussed or illustrated, unless specifically identified as an order of performance. It is also to be understood that additional or alternative steps may be employed.

References to "a microprocessor" and "a processor" or "the microprocessor" and "the processor," can be understood to include one or more microprocessors that can communicate in a stand-alone and/or a distributed environment(s), and can thus be configured to communicate via wired or wireless communications with other processors, where such one or more processor can be configured to operate on one or more processor-controlled devices that can be similar or different devices. Furthermore, references to memory, unless otherwise specified, can include one or more processor-readable and accessible memory elements and/or components that can be internal to the processor-controlled device, external to the processor-controlled device, and can be accessed via a wired or wireless network. The terms multiplexer and de-multiplexer are used synonymously, being simply a matter of context.

It should be understood that the invention is not limited in its application to the details of construction and arrangements of the components set forth herein. The invention is capable of other embodiments and of being practiced or carried out in various ways. Variations and modifications of the foregoing are within the scope of the present invention. It also being understood that the invention disclosed and defined herein extends to all alternative combinations of two or more of the individual features mentioned or evident from the text and/or drawings. All of these different combinations constitute various alternative aspects of the present invention. The embodiments described herein explain the best modes known for practicing the invention and will enable others skilled in the art to utilize the invention

**The following is a list of further preferred embodiments of the invention:**

Embodiment 1. An interface circuit for use with an industrial controller and configured to be connected to a temperature sensor, the interface circuit comprising:

a first terminal configured to releasably receive a first lead of the temperature sensor;

a second terminal configured to releasably receive a second lead of the temperature sensor, wherein the temperature sensor is of a type to generate a voltage as a function of a measured temperature; and

a resistance measuring circuit operatively connected to at least one of the first terminal and the second terminal and configured to measure a resistance value of the first and second leads when the temperature sensor is generating the voltage.

Embodiment 2. The interface circuit of embodiment 1 further comprising a switch module controllable to cause the resistance measuring circuit to operate in one of a first mode and a second mode, wherein during the first mode the resistance measuring circuit generates a first bias current transmitted out one of the first terminal and the second terminal and returning via the other of the first terminal and the second terminal and during the second mode the resistance measuring circuit generates a second bias current transmitted out one of the first terminal and the second terminal and returning via the other of the first terminal and the second terminal.

Embodiment 3. The interface circuit of embodiment 2 further comprising a memory device and wherein the first bias current is a known value stored in the memory device.

Embodiment 4. The interface circuit of embodiment 2 wherein the first bias current is an operational bias current applied to the temperature sensor during normal execution of a control program by the industrial controller and wherein the second bias current is a calibration bias current applied to the temperature sensor during execution of a calibration routine by the industrial controller.

Embodiment 5 The interface circuit of embodiment 4 wherein the operational bias current is between about 25 nA - 1 $\mu$A.

Embodiment 6. The interface circuit of embodiment 2 further comprising:

a voltage source configured to generate a reference voltage;

a first resistor operatively connected between an output of a controller and the first terminal when the resistance measuring circuit is in the first mode and disconnected from the output of the controller when the resistance measuring circuit is in the second mode;

a second resistor operatively connected between the voltage source and the first terminal when the resistance measuring circuit is in the second mode and disconnected from the voltage source when the resistance measuring circuit is in the first mode; and

a ground connection operatively connected to the second terminal.

Embodiment 7. The interface circuit of embodiment 2 further comprising a current source operatively connected to one of the first terminal and the second terminal, wherein the current source is configured to generate the first bias current in the first mode and to generate the second bias current in the second mode.

Embodiment 8. The interface circuit of embodiment 2 wherein the first bias current is between about 25 nA - 1 $\mu$A and the second bias current is greater than 10 $\mu$A.

Embodiment 9. The interface circuit of embodiment 1 further comprising:

a voltage measuring circuit to measure a voltage potential between the first terminal and the second terminal; and

a controller configured to subtract a compensation voltage from the voltage potential measured between the first terminal and the second terminal, wherein the compensation voltage corresponds to a magnitude of a bias current applied to the first terminal when measuring the temperature multiplied by the resistance value of the first lead and the second lead.

Embodiment 10. A module for use with an industrial controller and configured to be connected to a temperature sensor, the module comprising:

a first terminal configured to releasably receive a first lead of the temperature sensor;

a second terminal configured to releasably receive a second lead of the temperature sensor, wherein the temperature sensor is of a type to generate a voltage as a function of a measured temperature;

a switch configured to receive a control signal and to selectively provide one of a first bias current and a second bias current to one of the first and the second terminals as a function of the control signal; and

a controller configured to generate the control signal for the switch and to receive a signal corresponding to a measured voltage present between the first terminal and the second terminal.

Embodiment 11. The module of embodiment 10 further comprising a bias current circuit configured to supply the first bias current and the second bias current.

Embodiment 12. The module of embodiment 11 wherein the bias current circuit includes:

a voltage source configured to generate a reference voltage;

a first resistor operatively connected between an output of a controller and the first terminal when the control signal to the switch selects the first bias current and disconnected from the output of the controller when the control signal to the switch selects the second bias current;

a second resistor operatively connected between the voltage source and the first terminal when the control signal to the switch selects the second bias current and disconnected from the voltage source when the control signal to the switch selects the first bias current; and

a ground connection operatively connected to the second terminal.

Embodiment 13. The module of embodiment 11 wherein the bias current circuit includes a current source operatively connected to one of the first terminal and the second terminal, wherein the current source is configured to selectively generate the first bias current and the second bias current.

Embodiment 14. The module of embodiment 10 further comprising a controller configured to:

receive a first voltage signal corresponding to the voltage present between the first terminal and the second terminal when the first bias current is provided,

receive a second voltage signal corresponding to the voltage present between the first terminal and the second terminal when the second bias current is provided, and

determine a resistance value of the first lead and the second lead of the temperature sensor.

Embodiment 15. The module of embodiment 14 wherein the controller is further configured to subtract a compensation voltage from the voltage generated by the temperature sensor as a function of the measured temperature, wherein the compensation voltage corresponds to a magnitude of a bias current applied to the first terminal when measuring the temperature multiplied by the resistance value of the first lead and the second lead.

Embodiment 16. The module of embodiment 10 wherein the first bias current is between about 25 nA - 1 $\mu$A and the second bias current is greater than 10 $\mu$A.

Embodiment 17. The module of embodiment 10 wherein an operational bias current applied to the first terminal to when measuring the temperature is between about 25 nA - 1 $\mu$A.

Embodiment 18. A method of measuring temperature with a temperature sensor having a first lead and a second lead, wherein the first lead is connected to a first terminal of a module of an industrial controller and the second lead is connected to a second terminal of the module and wherein the temperature sensor generates a signal voltage as a function of the temperature, the method comprising the steps of:

supplying a first bias current to the first lead of the temperature sensor;

measuring a first voltage between the first terminal and the second terminal;

supplying a second bias current to the first lead of the temperature sensor, the second bias current having a different amplitude than the first bias current;

measuring a second voltage between the first terminal and the second terminal;

determining a resistance value of the first lead and the second lead as a function of the first and the second measured voltages; and

subtracting a compensation voltage from the signal voltage, wherein the compensation voltage corresponds to a magnitude of a bias current applied to the first terminal when measuring temperature multiplied by the resistance value of the first lead and the second lead.

Embodiment 19. The method of embodiment 18 wherein the first bias current is an operational bias current supplied to the first lead to detect an open circuit between the first terminal and the second terminal.

Embodiment 20. The method of embodiment 18 wherein the first bias current is a test current applied during manufacture of the module, the first voltage is measured when the test current is applied, and a value of one of the first voltage and the first bias current is stored in a memory device in the module.

Parts List

| Part No. | Description |
|---|---|
| 10 | Industrial control system |
| 12 | Industrial controller |
| 14 | Processor |
| 16 | Memory device |
| 18 | Control program |
| 19 | Human Machine Interface (HMI) |
| 20 | Display |
| 22 | Keyboard |
| 23 | Thermocouple lead |
| 24 | I/O Module |
| 25 | Controller |
| 26 | Thermocouple |
| 27 | Interface circuit |
| 30 | Cold junction terminal |
| 32 | Hot junction |
| 34 | A/D converter |
| 36 | Operational amplifier |
| 38 | Precision resistor |
| 40 | Resistor |
| 42 | Switch module |
| 43 | Control signal |
| 44 | Voltage source |
| 52 | Data point |
| 54 | Plot of voltage versus current |
| 60 | Voltage level |
| 100 | Flowchart illustrating method of measuring temperature |
| 102 | Measure bias current step |
| 104 | Check if bias current equal zero step |
| 106 | Generate fault step |
| 108 | Check if calibrate run step |
| 110 | Obtain voltage values step |

(continued)

| Part No. | Description |
|---|---|
| 112 | Determine lead resistance step |
| 114 | Measure voltage step |
| 116 | Compensate voltage step |
| 118 | Determine temperature step |

**Claims**

1. An interface circuit for use with an industrial controller and configured to be connected to a temperature sensor, the interface circuit comprising:

   a first terminal configured to releasably receive a first lead of the temperature sensor;
   a second terminal configured to releasably receive a second lead of the temperature sensor, wherein the temperature sensor is of a type to generate a voltage as a function of a measured temperature; and
   a resistance measuring circuit operatively connected to at least one of the first terminal and the second terminal and configured to measure a resistance value of the first and second leads when the temperature sensor is generating the voltage.

2. The interface circuit of claim 1 further comprising a switch module controllable to cause the resistance measuring circuit to operate in one of a first mode and a second mode, wherein during the first mode the resistance measuring circuit generates a first bias current transmitted out one of the first terminal and the second terminal and returning via the other of the first terminal and the second terminal and during the second mode the resistance measuring circuit generates a second bias current transmitted out one of the first terminal and the second terminal and returning via the other of the first terminal and the second terminal.

3. The interface circuit of claim 2 wherein the first bias current is between about 25 nA - 1 $\mu$A.

4. The interface circuit of claim 3 wherein the second bias current is greater than 10 $\mu$A.

5. The interface circuit of claim 2 further comprising:

   a voltage source configured to generate a reference voltage;
   a first resistor operatively connected between an output of a controller and the first terminal when the resistance measuring circuit is in the first mode and disconnected from the output of the controller when the resistance measuring circuit is in the second mode;
   a second resistor operatively connected between the voltage source and the first terminal when the resistance measuring circuit is in the second mode and disconnected from the voltage source when the resistance measuring circuit is in the first mode; and
   a ground connection operatively connected to the second terminal.

6. The interface circuit of claim 2 further comprising a current source operatively connected to one of the first terminal and the second terminal, wherein the current source is configured to generate the first bias current in the first mode and to generate the second bias current in the second mode.

7. The interface circuit of claim 1 further comprising:

   a voltage measuring circuit to measure a voltage potential between the first terminal and the second terminal; and
   a controller configured to subtract a compensation voltage from the voltage potential measured between the first terminal and the second terminal, wherein the compensation voltage corresponds to a magnitude of a bias current applied to the first terminal when measuring the temperature multiplied by the resistance value of the first lead and the second lead.

8. A method of measuring temperature with a temperature sensor having a first lead and a second lead, wherein the first lead is connected to a first terminal of a module of an industrial controller and the second lead is connected to a second terminal of the module and wherein the temperature sensor generates a signal voltage as a function of the temperature, the method comprising the steps of:

supplying a first bias current to the first lead of the temperature sensor;
measuring a first voltage between the first terminal and the second terminal;
supplying a second bias current to the first lead of the temperature sensor, the second bias current having a different amplitude than the first bias current;
measuring a second voltage between the first terminal and the second terminal;
determining a resistance value of the first lead and the second lead as a function of the first and the second measured voltages; and
subtracting a compensation voltage from the signal voltage, wherein the compensation voltage corresponds to a magnitude of a bias current applied to the first terminal when measuring temperature multiplied by the resistance value of the first lead and the second lead.

9.   The method of claim 8 wherein the first bias current is an operational bias current supplied to the first lead to detect an open circuit between the first terminal and the second terminal.

10.   The method of claim 8 wherein the first bias current is a test current applied during manufacture of the module, the first voltage is measured when the test current is applied, and a value of one of the first voltage and the first bias current is stored in a memory device in the module.

FIG. 1

FIG. 2

FIG. 3

FIG. 4

FIG. 5

Europäisches
Patentamt

European
Patent Office

Office européen
des brevets

**EUROPEAN SEARCH REPORT**

Application Number

EP 15 15 2226

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 26 03 797 A1 (SOLARTRON ELECTRONIC GROUP) 9 September 1976 (1976-09-09) * page 2, paragraphs 1,2 * * page 3, paragraph 3 - page 4, paragraph 1 * * page 6, paragraph 3 - page 7, paragraph 2 * ----- | 1-10 | INV. G01K7/02 |
| X | WO 96/11389 A1 (HONEYWELL SA [FR]; KROLL MARK [FR]) 18 April 1996 (1996-04-18) * page 1, lines 7-9,14,15 * * page 4, line 20 - page 5, line 21 * * page 7, line 7 - line 26 * ----- | 1-10 | |
| A | US 2009/306839 A1 (YOUNGQUIST JOHN S [CA] ET AL) 10 December 2009 (2009-12-10) * paragraphs [0097], [0116] - [1123] * ----- | 1-10 | |

| | TECHNICAL FIELDS SEARCHED (IPC) |
|---|---|
| | G01K |

The present search report has been drawn up for all claims

| Place of search | Date of completion of the search | Examiner |
|---|---|---|
| The Hague | 24 July 2015 | Phleps, Stefanie |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

&  : member of the same patent family, corresponding
document

EPO FORM 1503 03.82 (P04C01)

**ANNEX TO THE EUROPEAN SEARCH REPORT
ON EUROPEAN PATENT APPLICATION NO.**                        EP 15 15 2226

This annex lists the patent family members relating to the patent documents cited in  the above-mentioned European search report.
The members are as contained in the European Patent Office EDP file on
The European Patent Office is in no way liable for these particulars which are merely given for the purpose of information.

24-07-2015

| Patent document cited in search report | | Publication date | Patent family member(s) | | Publication date |
|---|---|---|---|---|---|
| DE 2603797 | A1 | 09-09-1976 | DE | 2603797 A1 | 09-09-1976 |
| | | | FR | 2302514 A1 | 24-09-1976 |
| | | | GB | 1534280 A | 29-11-1978 |
| WO 9611389 | A1 | 18-04-1996 | AU | 3617695 A | 02-05-1996 |
| | | | AU | 3617995 A | 02-05-1996 |
| | | | EP | 0784786 A1 | 23-07-1997 |
| | | | WO | 9611389 A1 | 18-04-1996 |
| | | | WO | 9611390 A1 | 18-04-1996 |
| US 2009306839 | A1 | 10-12-2009 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61971207 A